# EUROPEAN PATENT SPECIFICATION

(11) **EP 4 027 938 B1**
(45) Date of publication and mention of the grant of the patent: **10.04.2024**
(21) Application number: 20776226.1
(22) Date of filing: 27.08.2020
(51) Int. Cl.: A61D 5/00, A01K 13/00, A61C 15/00

(54) **VETERINARY MEDICAL DEVICE**
VETERINÄRMEDIZINISCHES GERÄT
DISPOSITIF MÉDICAL VÉTÉRINAIRE

(30) Priority: 29.08.2019 IT 201900015240
(43) Date of publication of application: 20.07.2022
(73) Proprietor: Web Dental Design SRL, 48121 Ravenna (IT)
(72) Inventor: ERCOLANI, Carlo, 48123 Ravenna (IT)
(74) Representative: Roncuzzi, Davide
(86) International application number: PCT/IB2020/058019
(87) International publication number: WO 2021/038492

(56) References cited:
- IT-A1-201600 088 564
- JP-A- 2007 151 415
- US-A- 4 195 625
- US-A- 4 205 664

## Description

The present invention relates to a veterinary medical device. In particular, the present invention refers to a veterinary medical device designed to remove food residues and calcium deposits from rigid and/or soft surfaces. In greater detail, the present invention refers to a veterinary medical device designed to remove food residues and calcium deposits from rigid and/or soft surfaces in order to prevent dental infections in animals.

### DESCRIPTION OF THE STATE OF THE ART

It is known that lack of hygiene can cause inflammations of the tissues in the human or animal body which, in the more serious of cases, can lead to irreversible consequences; a very common consequence, in the case of poor dental hygiene, is the loss of teeth.

In the case of humans, dental hygiene is managed by combining the mechanical removal of food residues, solid aggregates and bacterial plaque that tends to harbour pathogenic germs. Normally, the removal of food residues is performed through the use of a toothbrush and a cleaning action using toothpaste. In the case of supragingival bacterial plaque, the removal is performed at home using mouthwashes, gels or chlorhexidine-based pastes and with scaling, while in the case of subgingival bacterial plaque the removal is performed with root planing and possibly using local or systematic drugs. It is in fact known that in humans, plaque is removed with a toothbrush and emulsify it with toothpaste and saliva, so as to then be disposed of by rinsing the oral cavity.

In the veterinary field, the problem is more complicated, given that animals cannot treat themselves, do not know how to rinse their oral cavity and, focusing on domestic animals, i.e. animals left free to occupy domestic spaces, more frequently dogs and cats, the care of their teeth is not one of the owners' priorities, mainly due to the lack of proven veterinary medical devices at limited costs, despite the risk of bacterial complications in the case of biting, accompanied by the transfer of bacteria residing in areas affected by the plaque.

The extension of the bristles normally exceeds the width of the buccal vestibular spaces of the animals, making it difficult to treat the animals' teeth, especially when cleaning the molars. On the other hand, shorter bristles in toothbrushes would be excessively rigid and would inadvertently risk traumatizing the teeth and gums of the animals treated, especially in the presence of periodontitis. With particular reference to the molars and premolars, the correct preservation of which, in the ways provided by nature, is essential to ensure that the occlusion is optimal and keeps the opposing front teeth distant. It is in fact known, that in the case of loss of even one of the four canine teeth problems of bad occlusion inevitably arise which, in some cases, can cause side effects in the anterior portion of the mouth due to lack of adequate support. A typical side effect is the perforation of the anterior gums by the canines, with side effects that are usually neoplastic. It is easy to understand that animals suffering from such problems would hardly allow themselves to have their mouth and gums treated with sanitising treatments. In order to prevent this drawback, the applicant has developed a solution that allows to save the teeth of domestic animals, particularly but not limited to dogs, by periodically performing sanitizing treatments using an instrument described in the Italian patent IT 102016000088564, deposited on 22.02. 2019. In particular, from the teachings of this patent, it is known to use plastic material having a trabecular structure shaped into flat bodies of a given thickness provided with an adhesive face that allows them to be applied to the thumb and to the index finger of a disposable latex glove, or other material with similar physical characteristics, as well as to the end of a flat and narrow rod. The solution set forth in the patent IT '564, although it is particularly innovative compared to the prior art at the time of the application, as well as being decisively very well tolerated by the animals on which it is used, has been furthermore improved by the applicant as will be shown below, with reference to a practical, effective and hygienic veterinary medical device for treating small or large animals. A gum cleaning implement is known from US4195625 A.

For the sake of clarity, here and in the following, the terms "trabeculated" and "trabecular" are used to describe a branched structure provided with a plurality of solid triangular structures, similarly to the bone structure or structures with which solid shapes to be subjected to so-called "finite elements" analyses or more synthetically FEM, are virtually replicated by means of suitable calculation programs.

### SUMMARY OF THE PRESENT INVENTION

The present invention relates to a veterinary medical device. In particular, the present invention refers to a veterinary medical device designed to remove food residues and calcium deposits from rigid and/or soft surfaces. In greater detail, the present invention refers to a veterinary medical device designed to remove food residues and calcium deposits from rigid and/or soft surfaces in order to prevent dental infections in animals.

The aim of the present invention is to achieve a veterinary medical device that can be successfully used to mechanically remove food residues but, even more so, solid aggregates, dental bacterial plaque and supragingival plaque and internally accumulated from the cheeks of domestic animals, in order to prevent formation and proliferation of pathogenic germs in a practical and economic manner.

According to the present invention as defined in claim a veterinary medical device that can be successfully used in the buccal cavities of domestic animals, preferably but not limited to dogs and cats, is achieved and the main characteristics of this device will be described in at least one of the following claims. Preferred embodiments of the invention are defined in the dependent claims.

According to some embodiments of the present invention, a veterinary medical device is produced to remove deposits of substances colonizable by pathogens; said device having a rod which is elongated according to a given direction and has a shank longitudinally delimited by a substantially arrow-shaped end section which develops longitudinally between a rounded free end and a bottom portion; said end section comprises a first face that develops between said end and said bottom portion; characterized in that said first face has a substantially wedge-shaped cuspate lug. In some cases, said elongated end section comprises a second face which is opposite to said first face and develops between said end and said bottom portion; said second face having a first projection and a second projection arranged between said longitudinal end and said bottom portion.

In other cases, said lug is symmetrical relative to a longitudinal median plane and has a rounded cusp which rises from a triangular base shaped similarly to an acute isosceles triangle.

According to a variant of the present invention, said lug has a first portion and a second portion, where said first portion has a longitudinal extension of between two and three times the longitudinal extension of said second portion.

Preferably, said lug has a transverse section shaped similarly to a Gaussian curve with rounded edges.

In some cases, said first projection has a substantially trapezoidal plan and said second projection has a substantially polygonal plan symmetrically shaped relative to said second median plane, provided with at least six sides and rounded vertices and are symmetrically shaped relative to said median plane and are connected by a substantially circular arcuate transverse section.

In other cases, said shank has a substantially squashed rectangular section and is delimited by a third face and by a fourth face opposite to one another, each recognizable to the touch by a respective first and second differently shaped recognition element and has a coupling portion on the opposite side to said end, wherein said coupling member is arranged for bayonet fitting with a handle in a fixed and selectively releasable way.

According to a variant of the present invention, the use of a remover body is envisaged applicable in an adhesive manner to said end section and shaped to cover it in a conjugated manner on the first and second faces. Preferably, said remover body has a plan shape similar to an hourglass.

In addition, said remover body is of the type having a plurality of cells connected to one another through respective linear elements to define a trabecular structure.

According to a variant of the present invention, said remover body is produced in polyether- or polyester-based reticulated polyurethane foam.

In other cases, said rod is produced in moulded plastic material.

According to a variant of the present invention, an oral hygiene kit is produced comprising a veterinary medical device to remove deposits of substances colonizable by pathogens; said device having a rod that is elongated according to a given direction and has a shank longitudinally delimited by a substantially arrow-shaped end section that develops longitudinally between a rounded end and a bottom portion; said end section comprising a first face and a second face opposite one another which develop between said end and said bottom portion; said first face having a wedge-shaped cuspate lug and said second face has a first projection and a second projection both arranged between said longitudinal end and said bottom portion; a remover body of the type having a plurality of cells connected to one another by respective linear elements to define a trabecular structure and applicable in an adhesive manner to said end section and shaped to cover it in a conjugated manner on the first and second faces; said kit comprising toothpaste.

### BRIEF DESCRIPTION OF THE FIGURES

Further characteristics and advantages of the veterinary medical device designed to remove food residues and calcium deposits from rigid and/or soft surfaces from cavities in the body of animals, according to the present invention, will appear clearer from the ensuing description, shown with reference to the attached Figures which illustrate at least one non-limiting embodiment example, wherein identical or corresponding parts are identified by the same reference numbers, if deemed to be of practical use.

In particular:
- Figures 1-2 are schematic perspective views of a device according to the present invention where some parts have not been illustrated to facilitate their understanding;
- Figures 3-4 illustrate two plan views of Figure 2 on an enlarged scale and with parts removed for the sake of clarity;
- Figure 5 is view of a detail of Figure 1 on an enlarged scale;
- Figure 6 is a view of a detail of Figure 1 on an enlarged scale;
- Figure 7 is a schematic perspective view of Figure 6;
- Figure 8 is a longitudinal section view of Figure 7;
- Figure 9 illustrates the traces of a plurality of transverse sections of Figure 7;
- Figures 10-15 illustrate a plurality of sections of Figure 8;
- Figure 16 shows, in a plan view, a flat body that can be used in an adhesive manner to coat Figure 7;
- Figure 16a is a longitudinal section view of a portion of the whole device 1; and
- Figure 16b is a plan view of Figure 16a.

### DETAILED DESCRIPTION OF THE PRESENT INVENTION

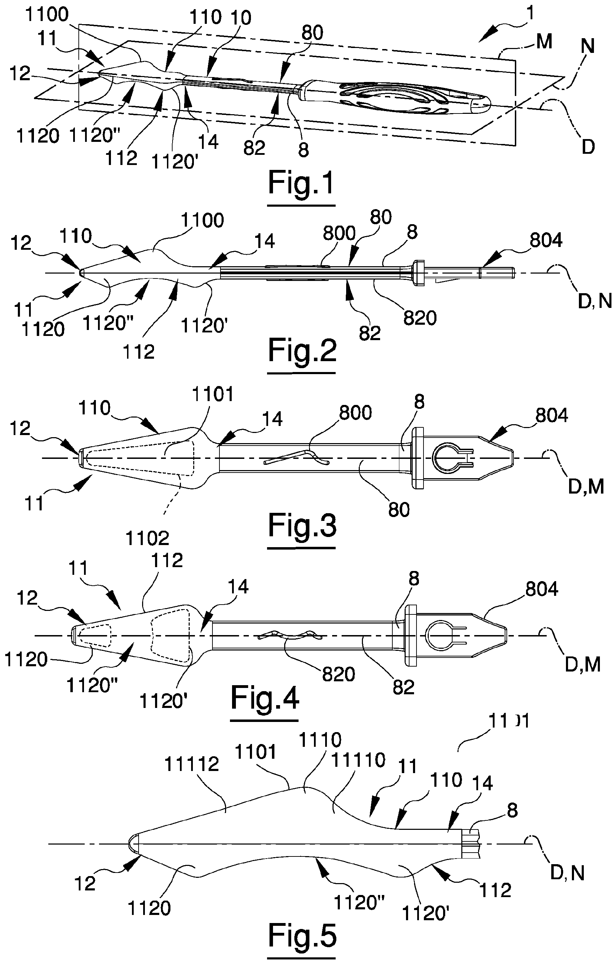

In Figure 1, 1 denotes, as a whole, a veterinary medical device that can be successfully used to remove food residues and calcium deposits from rigid and/or soft surfaces from the mouths of animals, preferably but not limited to dogs, and deposits of substances colonizable by pathogens. With particular reference to Figure 5, this device 1 comprises a rod 10 produced by moulding plastic material and elongated according to a given D direction. With reference to Figures 1-4, the rod 10 comprises a shank 8 which is longitudinally delimited by the end section 11 and has a substantially squashed rectangular section with rounded edges and symmetrical relative to a longitudinal median plane N shown in Figure 1. The shank 8 has a reduced thickness relative to the extension of rod 10, so that it is flexible relative to the same plane N.

In Figure 3, the end section 11 has a pointed shape and develops based on an isosceles triangular shape with a rounded tip that lies on the plane N. In particular, the section 11 is longitudinally developed between a bottom portion 14 and a rounded end 12. Moreover, the end section 11 is of a tapered type, therefore substantially arrow-shaped, and develops between the end 12 and the bottom portion 14. The end section 11 comprises a first face 110 that has a wedge-shaped cuspate lug 1100, which rises from the plane N. In addition, the end section 11 comprises a second face 112 which develops on the opposite side to the first face 110 relative to the plane N between the end 12 and the bottom portion 14. This second face 112 has a first projection 1120' and a second projection 1120' arranged between the end 12 and the bottom portion 14. In particular, it is useful to specify that the plane N separates the first face 110 from the second face 112.

In addition, with particular reference to Figures 3 and 4, the shank 8 is delimited by a third face 80 and by a fourth face 82 opposite to one another, each being recognisable to the touch by a respective first element 800 and second element 820 in differently shaped lug so as to be easily distinguishable. In particular, the first element 800 is profiled to schematically reproduce the shape of the lug 1100 in lateral elevation and the second element 820 is profiled to schematically reproduce the shape of the two projections 1120 and 1120' in lateral elevation. The shank 8 also has a coupling portion 804 on the opposite side to the end 12, where this coupling element 804 is arranged for bayonet fitting with a handle H in a fixed and selectively releasable manner.

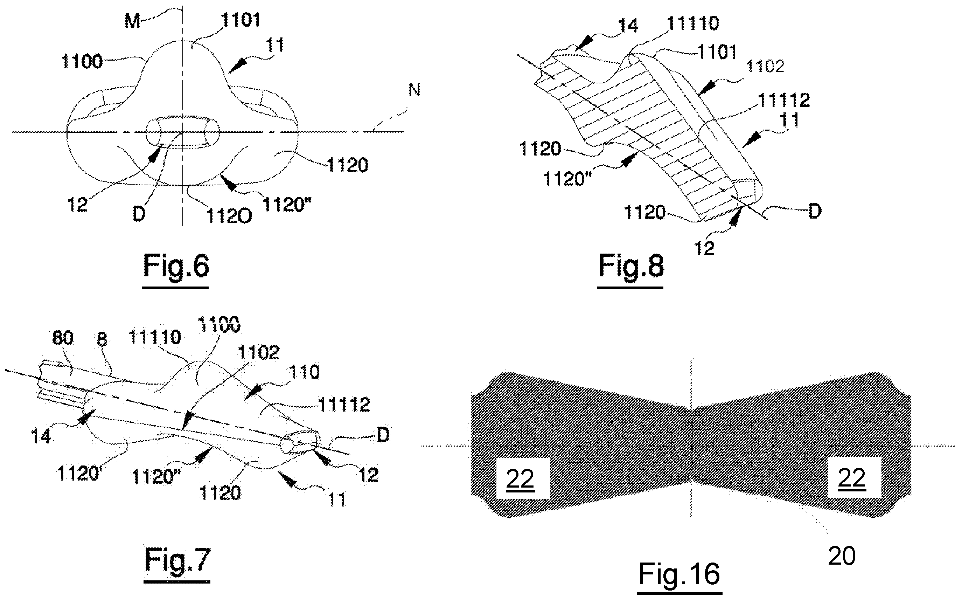

With particular reference to Figures 6-8, the lug 1100 is symmetrical relative to a longitudinal median plane M perpendicular to the plane N; the lug 1100 has a cusp 1101 shaped similarly to a pyramid with a base 1102 shaped similarly to an acute isosceles triangle having a vertex with a rounded base, as can be seen in Figure 3, where this base is represented with a dotted line.

The cusp 1101 longitudinally divides the lug 1100 into a first portion 11110 placed on the side of the bottom portion 14 and a second portion 11112 placed on the side of the end 12, where the second portion 11112 has a longitudinal extension between 2 and three times the longitudinal extension of the first portion 11110 of the base.

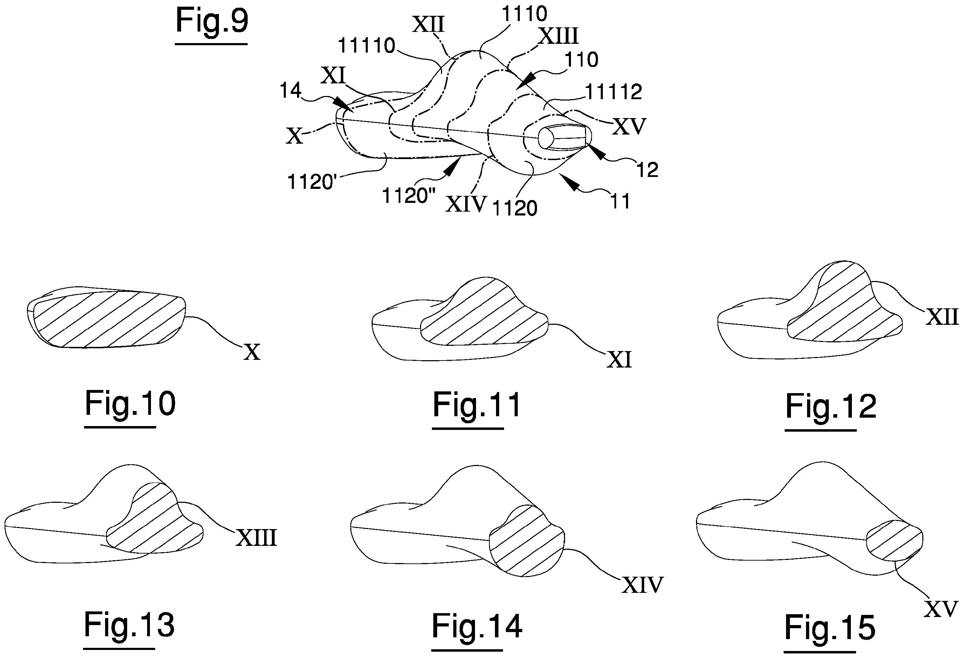

Furthermore, with reference to Figures 9-15, the lug 1100 has a transverse section, according to planes perpendicular to both the planes N and M, shaped similarly to a Gaussian curve with rounded edges, wherein each of the Figures 10-15 shows, at the front, the shape of the corresponding section X-XV.

On the other hand, considering the second face 112 (see Figures 4 and 6-8) the respective first projection 1120 has a substantially trapezoidal plan with rounded vertices and the second projection 1120' has a quadrilateral plan with rounded vertices symmetrical relative to the second plane M, where the part facing the end 12 is at least partially concave on that side. Both projections are represented in Figure 4 with dotted lines. The first and second projections 1120 and 1120' are symmetrically shaped relative to the median plane M and are connected by a substantially circular arcuate transverse section 1120" (see the trace in Figure 4).

It is deemed useful to specify that in Figure 4 the plan of the second projection 1120' may have a perimeter composed of any number of rounded sides and vertices without departing from the scope of the present invention according to different design requirements.

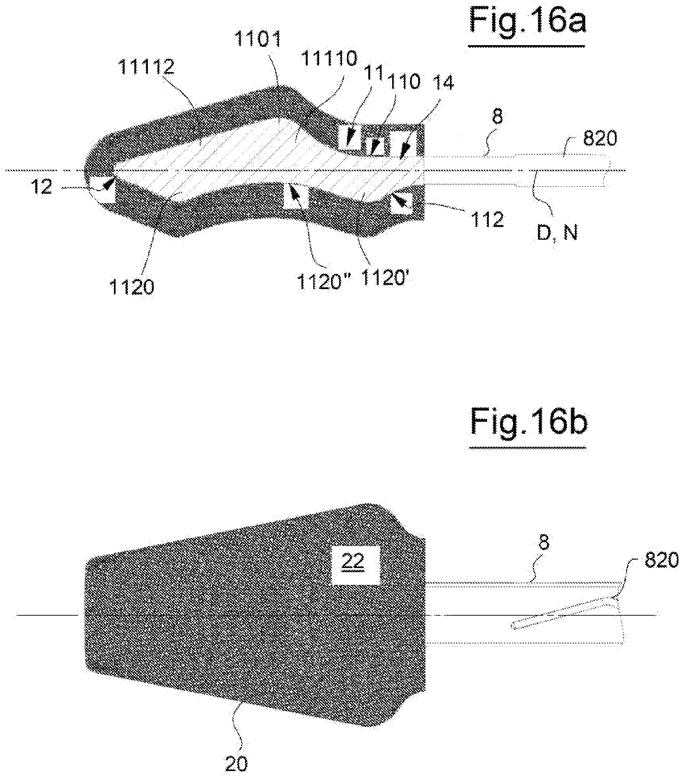

With particular reference to Figures 16a and 16b, the device 1 comprises a remover body 20, better seen in Figure 16. This remover body 20 has a constant thickness (Figure 16a), is shaped like an hourglass and, for this reason, it is provided with two flaps 22 connected end to end, each of which is shaped in plan with a shape that recalls an isosceles trapezium. Each flap 22 has a longitudinal extension equal to at least the longitudinal extension of the end section 11.

The remover body 20 is produced in polyether- or polyester-based reticulated polyurethane foam, it therefore has a plurality of cells similarly to what is described in the Italian patent IT 102016000088564. In particular, the cells are connected to one another through their respective linear edge elements to define a trabecular structure. For example, but in a non-limiting manner, the remover body 20 can be produced by using a material called *Filtren*^{®} *(a registered trademark of Eurofoam)* which is intrinsically non-toxic and abrasive to the touch, therefore it is ideal for removing dental deposits. Its limited cost makes it particularly suitable for "disposable" uses, for which the device 1 was designed.

It should be pointed out that the hourglass shape of the remover body and the extension of the two flaps 22 allows the first face 110 and the second face 112 of the end section 11 to be completely covered with the remover body and in a conjugated manner. In particular, one of the hourglass-shaped faces of the remover body 20 (which joins the two flaps 22) is adhesive and has the purpose of permanently applying one of the two flaps 22 to the first face 110, adhering to the respective lug 1100, and the other flap to the second face 112 adhering to the first and second projections 1120 and 1120', as can be seen in Figure 16a.

The use of the device 1 is easily understandable from what has been described above and does not require further explanation. In particular, it may be useful to specify that the end section 11 has two faces shaped differently which makes the device 1 bivalent, therefore provided with two dental instruments with a practically identical longitudinal extension, one for the first face 110 and one for the second face 112 of the end section 11, usable for complementary purposes due to the different shapes of these faces. The fact that the device 1 has a substantially arrow-shaped tapered tip, with an increasing transverse section from the end 12 to the bottom portion 14, where the first face 110 and the second face 112 are abrasive due to the presence of the remover body 20 which facilitates the operation of the two dental instruments. With reference to the choice of conforming the shank 8 of the rod 10 having a squashed section as already described, it gives transversal elasticity to the shank 8 itself relative to the plane N, allowing a maximum force to be exerted on teeth and gums at the end section 11 which is correlated to the force sufficient to cause the bending of the shank 8.

In regard to what has been described above, the device 1 can be used to treat the lateral portions of the teeth, specifically those in which the molars are found, which delimit a slightly concave surface towards the outside with their external portion. This area, also known as the vestibular area, can be effectively treated by using the device 1 with the first face 110 provided with the cuspidate lug 1100 facing the molars and premolars. In particular, the device 1 can be used on the frontal portion of the teeth, which has incisors at the centre and canines at the sides, where this portion is convex and substantially arcuate-shaped, therefore particularly suitable to be treated by using the second face 112 due to the presence of the two projections 1120 and 1120' connected by the arcuate section 1120".

In addition, it should be specified that, the arrow-shape of the end section 11 makes it easy to reach the back of the mouth, in the concave vestibular space between the masseter, which is notoriously a particularly powerful and bulky muscle, which is why this space is considered particularly small and therefore normally unreachable with the devices discussed above without producing abnormal muscle tension and excessive pressure on the teeth. Therefore, the reduced dimensions of the end section 11 covered with the remover member 20 applied to the first face 110 and to the second face 112 make it particularly practical to clean all the areas of the mouth, including the internal surfaces of the cheeks, thus allowing the treated animal to keep its mouth almost completely closed, this being a condition of maximum muscle laxity, without causing trauma to the treated animal.

Finally, it is clear that modifications can be made to the device 1 described above without departing from the scope of the present invention defined by the appended claims.

It is easy to understand that, in the above description, no mention was ever made to the dimensions to be given to the device 1 and its constructive elements. This is because the dimensions and proportions of its own parts can be defined on the basis of the type of animal to be treated, possibly producing the device 1 with only one between the first face 110 and the second face 112 and with a rod 10 having a length and thickness definable according to the needs, in order to achieve the purposes illustrated above.

For example, but not limited to, if it is desired to externally sanitise the incisors of the upper and lower arches of horses, it will be convenient to adjust the size of the device 1 to the size of the teeth of these animals and to reinforce the rod 10 to allow the application of a greater tangential force to the teeth through the remover body 20 applied externally to the end section 11. Considering that the incisors of these animals with closed jaws reproduce a multi-faceted surface with double curvature, in order to maximize the effectiveness of the operation it is preferable to brush this surface with the portion of the remover body 20 covering the second face 112 of the device 1.

In addition, in order to maximise the ability to remove food residues and calcium deposits from hard and/or soft surfaces of the mouth of animals, it may be useful to package the device 1 together with a toothpaste that would be used to cover the flaps 22 of the remover body 20 before starting the cleaning operation in contact with the teeth of the animal to be treated. The set of these items, the device 1 and the toothpaste, paste or powder, allows to package a kit that contains all the necessary and sufficient instrumentation to easily sanitize the teeth of an animal.

In regard to what is described above, the ease with which the device 1 makes it possible to reach every area of the dog's mouth is not possible through any device known in the prior art. For this reason, the device 1 is a very valid instrument to remove dental deposits with great effectiveness in animals, or even humans, with a limited cost and total safety for the operator who performs the sanitising treatment.

## Claims

1. A medical device (1) for removing deposits of substances colonizable by pathogens from the oral cavity of an animal; said device (1) having a rod (10) which is elongated according to a given direction (D) and has a shank (8) symmetrically shaped relative to a first median plane (N) and longitudinally delimited by an end section (11) which develops longitudinally in a tapered manner starting from a bottom portion (14) and delimited by a rounded end (12); said end section (11) comprising a first face (110) and a second face (112) opposite to one another which develop between said end (12) and said bottom portion (14);
wherein said first median plane (N) separates said first face (110) from said second face (112); said first face (110) having a substantially wedge-shaped cuspate lug (1100) which rises from said first plane (N); said second face (112) having a first projection (1120) and a second projection (1120') arranged between said longitudinal end (12) and said bottom portion (14).

2. The device according to claim 1, **characterized in that** said lug (1100) symmetrical relative to a second longitudinal median plane (M) of said shank (8) orientated transversely to said first plane (N); said lug (1100) having a rounded cusp (1101) provided with a triangular base (1102) shaped similarly to an acute isosceles triangle having a vertex with a rounded base.

3. The device according to claim 2, **characterized in that** said lug (1100) has a first portion (11110) and a second portion (11112), where said second portion (11112) has a longitudinal extension comprised between 2 times and three times the longitudinal extension of said first portion (11110).

4. The device according to any one of the preceding claims, **characterized in that** said lug (1100) has a transverse section shaped similarly to a Gaussian curve with rounded edges.

5. The device according to any one of the preceding claims, **characterized in that** said first projection (1120) has a substantially trapezoidal plan and said second projection (1120') has a substantially polygonal plan symmetrically shaped relative to said second median plane (M) and provided with rounded vertices; said first projection (1120) and said second projection (1120') being connected by an arcuate section (1120") having a substantially circular arcuate transverse section.

6. The device according to any one of the preceding claims, **characterized in that** said shank (8) has a substantially squashed rectangular section, is delimited by a third face (80) and by a fourth face (82) opposite each other, each provided with a respective first (800) and second protruding recognition element (820); said shank (8) having a coupling portion (804) on the side opposite to said end (12), where said coupling member (804) is arranged to couple by bayonet fitting with a handle (H) in a fixed and selectively releasable manner.

7. The device according to any one of the preceding claims, **characterized in that** it comprises a remover body (20) applied in an adhesive manner to said end section (11) and shaped to cover it in a conjugated manner on the first (110) and second (112) faces.

8. The device according to claim 7, **characterized in that** said remover body (20) has a plan shape similar to an hourglass.

9. The device according to claim 7 or 8, **characterised in that** said remover body (20) is of the type having a plurality of cells connected to one another through respective linear elements to define a trabecular structure.

10. The device according to claim 8 or 9, **characterized in that** said remover body (20) is produced in polyether- or polyester-based reticulated polyurethane foam.

11. The device according to any one of claims 1-10, **characterized in that** said rod (10) is made of moulded plastic material in order to be elastic.

12. An oral hygiene kit comprising a veterinary medical device according to any one of the claims 1-11, **characterized in that** it comprises toothpaste in paste or powder.

## Patentansprüche

1. Eine medizinische Vorrichtung (1) zum Entfernen von Ablagerungen von Stoffen, die von Pathogenen kolonisierbar sind, aus der Maulhöhle eines Tiers; wobei die Vorrichtung (1) einen Stab (10) aufweist, der gemäß einer gegebenen Richtung (D) langgestreckt ist und einen Schaft (8) aufweist, der relativ zu einer ersten Medianebene (N) symmetrisch geformt ist und längs von einem Endabschnitt (11) begrenzt ist, der längs auf verjüngte Weise ausgehend von einem unteren Teilabschnitt (14) gebildet ist und von einem abgerundeten Ende (12) begrenzt ist; wobei der Endabschnitt (11) eine erste Oberfläche (110) und eine zweite Oberfläche (112), die einander gegenüberliegen, beinhaltet, die zwischen dem Ende (12) und dem unteren Teilabschnitt (14) gebildet sind;
wobei die erste Medianebene (N) die erste Oberfläche (110) von der zweiten Oberfläche (112) trennt; die erste Oberfläche (110) eine im Wesentlichen keilförmige spitze Nase (1100) aufweist, die sich von der ersten Ebene (N) erhebt; die zweite Oberfläche (112) einen ersten Vorsprung (1120) und einen zweiten Vorsprung (1120') aufweist, die zwischen dem Längsende (12) und dem unteren Teilabschnitt (14) angeordnet sind.

2. Vorrichtung gemäß Anspruch 1, **dadurch gekennzeichnet, dass** die Nase (1100) relativ zu einer transversal zu der ersten Ebene (N) orientierten zweiten längslaufenden Medianebene (M) des Schafts (8) symmetrisch ist; die Nase (1100) eine abgerundete Spitze (1101) aufweist, die mit einer dreieckigen Basis (1102) versehen ist, die ähnlich einem spitzwinkligen gleichschenkligen Dreieck mit einem Scheitel mit einer abgerundeten Basis geformt ist.

3. Vorrichtung gemäß Anspruch 2, **dadurch gekennzeichnet, dass** die Nase (1100) einen ersten Teilabschnitt (11110) und einen zweiten Teilabschnitt (11112) aufweist, wobei der zweite Teilabschnitt (11112) eine Längserstreckung aufweist, die zwischen dem 2-Fachen und dem Dreifachen der Längserstreckung des ersten Abschnitts (11110) beinhaltet.

4. Vorrichtung gemäß einem der vorangehenden Ansprüche, **dadurch gekennzeichnet, dass** die Nase (1100) einen transversalen Abschnitt aufweist, der ähnlich einer Gaußschen Kurve mit abgerundeten Kanten geformt ist.

5. Vorrichtung gemäß einem der vorangehenden Ansprüche, **dadurch gekennzeichnet, dass** der erste Vorsprung (1120) einen im Wesentlichen trapezförmigen Grundriss aufweist und der zweite Vorsprung (1120') einen im Wesentlichen vieleckigen Grundriss aufweist, die relativ zu der zweiten Medianebene (M) symmetrisch geformt sind und mit abgerundeten Scheiteln versehen sind; wobei der erste Vorsprung (1120) und der zweite Vorsprung (1120') durch einen bogenförmigen Abschnitt (1120") verbunden sind, der einen im Wesentlichen kreisbogenförmigen transversalen Abschnitt aufweist.

6. Vorrichtung gemäß einem der vorangehenden Ansprüche, **dadurch gekennzeichnet, dass** der Schaft (8) einen im Wesentlichen gequetscht rechteckigen Abschnitt aufweist, von einer dritten Oberfläche (80) und von einer vierten Oberfläche (82), die einander gegenüberliegen und jeweils mit einem ersten (800) bzw. einem zweiten vorstehenden Erkennungselement (820) versehen sind, begrenzt ist; wobei der Schaft (8) auf der dem Ende (12) gegenüberliegenden Seite einen Kopplungsteilabschnitt (804) aufweist, wobei das Kopplungsglied (804) dazu angeordnet ist, durch Bajonettpassung mit einem Griff (H) auf feste und selektiv lösbare Weise zu koppeln.

7. Vorrichtung gemäß einem der vorangehenden Ansprüche, **dadurch gekennzeichnet, dass** sie einen Entfernerkörper (20) aufweist, der auf klebende Weise auf den Endabschnitt (11) aufgebracht ist und geformt ist, um ihn auf konjugierte Weise auf der ersten (110) und der zweiten (112) Oberfläche abzudecken.

8. Vorrichtung gemäß Anspruch 7, **dadurch gekennzeichnet, dass** der Entfernerkörper (20) eine Grundrissform ähnlich einer Sanduhr aufweist.

9. Vorrichtung gemäß Anspruch 7 oder 8, **dadurch gekennzeichnet, dass** der Entfernerkörper (20) von der Art ist, die eine Vielzahl von Zellen aufweist, die durch jeweilige geradlinige Elemente miteinander verbunden sind, um eine trabekuläre Struktur zu bilden.

10. Vorrichtung gemäß Anspruch 8 oder 9, **dadurch gekennzeichnet, dass** der Entfernerkörper (20) aus polyether- oder polyesterbasiertem netzartigem Schaumstoff erzeugt ist.

11. Vorrichtung gemäß einem der Ansprüche 1-10, **dadurch gekennzeichnet**, das der Stab (10) aus geformtem Kunststoff hergestellt ist, um elastisch zu sein.

12. Ein Maulhygieneset, umfassend eine veterinärmedizinische Vorrichtung gemäß einem der Ansprüche 1-11, **dadurch gekennzeichnet, dass** sie Zahnpasta als Paste oder Pulver beinhaltet.

## Revendications

1. Un dispositif médical (1) pour éliminer des dépôts de substances colonisables par des agents pathogènes de la cavité buccale d'un animal ; ledit dispositif (1) ayant une baguette (10) qui est allongée selon une direction donnée (D) et a une tige (8) présentant une forme symétrique par rapport à un premier plan médian (N) et délimitée longitudinalement par une section d'extrémité (11) qui se développe longitudinalement de manière conique en commençant à partir d'une portion basse (14) et délimitée par une extrémité (12) arrondie ; ladite section d'extrémité (11) comprenant une première face (110) et une deuxième face (112) opposées l'une à l'autre qui se développent entre ladite extrémité (12) et ladite portion basse (14) ;
dans lequel ledit premier plan médian (N) sépare ladite première face (110) de ladite deuxième face (112) ; ladite première face (110) ayant un ergot (1100) cuspidé essentiellement cunéiforme qui s'élève à partir dudit premier plan (N) ; ladite deuxième face (112) ayant une première saillie (1120) et une deuxième saillie (1120') disposées entre ladite extrémité (12) longitudinale et ladite portion basse (14).

2. Le dispositif selon la revendication 1, **caractérisé en ce que** ledit ergot (1100) symétrique par rapport à un deuxième plan médian longitudinal (M) de ladite tige (8) orienté transversalement audit premier plan (N) ; ledit ergot (1100) ayant une cuspide arrondie (1101) munie d'une base triangulaire (1102) présentant une forme similaire à un triangle isocèle aigu ayant un sommet avec une base arrondie.

3. Le dispositif selon la revendication 2, **caractérisé en ce que** ledit ergot (1100) a une première portion (11110) et une deuxième portion (11112), où ladite deuxième portion (11112) a une extension longitudinale comprise entre 2 fois et trois fois l'extension longitudinale de ladite première portion (11110).

4. Le dispositif selon n'importe laquelle des revendications précédentes, **caractérisé en ce que** ledit ergot (1100) a une section transversale présentant une forme similaire à une courbe de Gausse avec des bords arrondis.

5. Le dispositif selon n'importe laquelle des revendications précédentes, **caractérisé en ce que** ladite première saillie (1120) a un plan essentiellement trapézoïdal et ladite deuxième saillie (1120') a un plan essentiellement polygonal présentant une forme symétrique par rapport audit deuxième plan médian (M) et munie de sommets arrondis ; ladite première saillie (1120) et ladite deuxième saillie (1120') étant connectées par une section arquée (1120") ayant une section transversale essentiellement en arc circulaire.

6. Le dispositif selon n'importe laquelle des revendications précédentes, **caractérisé en ce que** ladite tige (8) a une section rectangulaire essentiellement aplatie, est délimitée par une troisième face (80) et par une quatrième face (82) opposées l'une à l'autre, chacune étant munie d'un premier (800) et d'un deuxième élément de reconnaissance saillant (820) respectif ; ladite tige (8) ayant une portion d'accouplement (804) sur le côté opposé à ladite extrémité (12), où ledit organe d'accouplement (804) est disposé pour s'accoupler par raccord à baïonnette avec un manche (H) d'une manière fixe et sélectivement amovible.

7. Le dispositif selon n'importe laquelle des revendications précédentes, **caractérisé en ce qu'**il comprend un corps d'élimination (20) appliqué de manière à adhérer à ladite section d'extrémité (11) et présentant une forme lui permettant de la recouvrir de manière conjuguée sur les première (110) et deuxième (112) faces.

8. Le dispositif selon la revendication 7, **caractérisé en ce que** ledit corps d'élimination (20) a une forme en plan similaire à un sablier.

9. Le dispositif selon la revendication 7 ou la revendication 8, **caractérisé en ce que** ledit corps d'élimination (20) est du type ayant une pluralité d'alvéoles connectées les unes aux autres par l'intermédiaire d'éléments linéaires respectifs afin de définir une structure trabéculaire.

10. Le dispositif selon la revendication 8 ou la revendication 9, **caractérisé en ce que** ledit corps d'élimination (20) est produit en mousse de polyuréthane réticulée à base de polyéther ou de polyester.

11. Le dispositif selon n'importe laquelle des revendications 1 à 10, **caractérisé en ce que** ladite baguette (10) est faite en matériau plastique moulé afin d'être élastique.

12. Un kit d'hygiène buccal comprenant un dispositif médical vétérinaire selon n'importe laquelle des revendications 1 à 11, **caractérisé en ce qu'**il comprend du dentifrice en pâte ou en poudre.
